(19) Europäisches Patentamt
European Patent Office
Office européen des brevets

(11) EP 4 185 463 B1

(12) EUROPEAN PATENT SPECIFICATION

(45) Date of publication and mention of the grant of the patent:
**02.10.2024 Bulletin 2024/40**

(21) Application number: **21734368.0**

(22) Date of filing: **01.07.2021**

(51) International Patent Classification (IPC):
***B32B 27/08*** (2006.01) ***B32B 27/32*** (2006.01)
***B32B 5/02*** (2006.01) ***C08J 5/18*** (2006.01)
***C08L 23/16*** (2006.01) ***E04D 5/10*** (2006.01)

(52) Cooperative Patent Classification (CPC):
(C-Sets available)
**B32B 5/022; B32B 5/024; B32B 27/08; B32B 27/12; B32B 27/32; B32B 27/327; B32B 27/36; C08J 5/18; C08L 23/16;**
B32B 2250/03; B32B 2250/24; B32B 2262/0253; B32B 2262/0276; B32B 2270/00; B32B 2307/536;

(Cont.)

(86) International application number:
**PCT/EP2021/068172**

(87) International publication number:
**WO 2022/017758 (27.01.2022 Gazette 2022/04)**

(54) **POLYOLEFIN COMPOSITION FOR ROOFING APPLICATIONS**
POLYOLEFINZUSAMMENSETZUNG FÜR BEDACHUNGSANWENDUNGEN
COMPOSITION DE POLYOLÉFINE POUR DES APPLICATIONS DE TOITURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2020 EP 20187720**

(43) Date of publication of application:
**31.05.2023 Bulletin 2023/22**

(73) Proprietor: **Basell Poliolefine Italia S.r.l.**
**20121 Milano (IT)**

(72) Inventors:
- **GRAZZI, Michele**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-03/076509**
**WO-A1-2011/076664**
**WO-A1-2012/152802**
**WO-A1-2017/089125**

EP 4 185 463 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
B32B 2307/54; B32B 2307/546; B32B 2307/558;
B32B 2307/581; B32B 2419/06; C08J 2323/14;
C08J 2423/14; C08L 2203/16; C08L 2207/02;
C08L 2314/02; E04D 5/10

C-Sets
**C08L 23/16, C08L 23/142**

## Description

FIELD OF THE INVENTION

The present disclosure relates to thermoplastic polyolefin compositions that can be used for the preparation of sheets or membranes having high resistance to perforation and deformation, while retaining softness and good mechanical properties. The sheets or membranes have a favorable balance of properties to find use as geomembranes or in roofing applications.

BACKGROUND OF THE INVENTION

Both elastomers and thermoplastic polyolefins are largely used in the art to produce sheets and membranes for single ply roofing.

Traditionally, polyvinyl chloride (PVC) and other chlorinated TPOs were used to prepare heat-weldable thermoplastic roofing sheets. However, PVC requires plasticizers to have the flexibility needed for roofing applications. The aging of membranes through plasticizers loss and the presence of chlorine in the polymer chains were the drivers for the substitution of PVC with chlorine-free thermoplastic polyolefins having the required mechanical properties in absence of plasticizers.

Heterophasic polyolefin compositions are used to prepare sheets or membranes for roofing applications, the compositions being heat-weldable, endowed with suitable mechanical properties and easily recyclable.

WO2011/076664 A1 discloses a polyolefin composition comprising: (I) a composition comprising (a) 10-40 wt% of a propylene homopolymer, or a copolymer of propylene with ethylene or a CH2=CHR alpha-olefin; and (b) 60-90 wt% of one or more copolymers selected from (b1) copolymers of ethylene, and (b2) copolymers of ethylene with propylene and the alpha-olefin; and (II) an additives package. The polyolefin composition is useful for producing a membrane for use as a geomembrane.

WO03/076509 discloses a polyolefin composition for roofing applications having good tenacity, the composition comprising: (A) 15-40 wt.% of a crystalline copolymer of propylene and (B) 60-85 wt.% of an elastomeric fraction comprising a copolymer of propylene with ethylene and a copolymer of ethylene with alpha-olefins.

WO2009/077481 discloses a membrane comprising a base layer (A) and a top layer (B). The base layer (A) is made of a heterophasic composition comprising: (a) 10-40 wt.% of a propylene homo- or copolymer; and (b) 60-90 wt.% of one or more copolymers of ethylene with a C3-C10 alpha-olefin. The top layer (B) comprises a propylene polymer selected among propylene homopolymers, propylene copolymers with ethylene or a C4-C10 alpha-olefin and combinations thereof. The membrane has good tensile properties and good tear resistance.

Highly inert multilayer membranes having good tear and puncture resistance are disclosed in WO2012/072426. The membrane comprises: a base layer (A) and a top layer (B). The base layer (A) comprises: (a) 10-40 wt.% of a propylene homo- or copolymer and (b) 60-90 wt.% of one or more copolymers of ethylene with a C3-C10 alpha-olefin. The top layer (B) comprises an ethylene homopolymer or copolymer having density from 0.915 to 0.980 g/cm$^3$.

In this context, there is still the need of polyolefin compositions with an appropriate balance of physical and mechanical properties and good processability, which are particularly suited for preparing sheets or membranes retaining softness and having good puncture and tear resistance.

SUMMARY OF THE INVENTION

The present disclosure provides a polyolefin composition comprising:

(A) 18-35% by weight of a copolymer of propylene with at least one alpha-olefin of formula $CH_2$=CHR, where R is H or a linear or branched C2-C3 alkyl, wherein

i) the copolymer contains 2.0-4.0% by weight of at least one alpha-olefin, the amount of the alpha-olefin is based on the total weight of (A); and
ii) the propylene copolymer has melt flow rate ($MFR_A$), measured according to ISO 1133, 230°C, 2.16 kg, ranging from 30 to 60 g/10min; and

(B) 65-82% by weight of a copolymer of propylene with at least one alpha-olefin of formula $CH_2$=CHR, and optionally a diene, where R is H or a linear or branched C2-C8 alkyl and wherein the copolymer comprises 20-35% by weight of alpha-olefin, the amount of alpha-olefin is based on the total weight of (B),

wherein

iii) the polyolefin composition comprises a fraction that is soluble in xylene at 25°C (XS(tot)) in an amount higher than 70% by weight;
iv) the amounts of (A), (B) and of the fraction soluble in xylene at 25°C (XS(tot)) are based on the total weight of the polyolefin composition, the total weight being 100; and
v) the melt flow rate (MFR), measured according to ISO 1133, 230°C, 2.16 kg, of the polyolefin composition ranges from 0.2 to 2.0 g/10 min.

The present disclosure also provides a sheet or membrane comprising a polyolefin composition comprising:

(A) 18-35% by weight of a copolymer of propylene with at least one alpha-olefin of formula $CH_2$=CHR, where R is H or a linear or branched C2-C3 alkyl, wherein

i) the copolymer contains 2.0-4.0% by weight of at least one alpha-olefin, the amount of the alpha-olefin is based on the total weight of (A); and
ii) the propylene copolymer has melt flow rate ($MFR_A$), measured according to ISO 1133, 230°C, 2.16 kg, ranging from 30 to 60 g/10min; and

(B) 65-82% by weight of a copolymer of propylene with at least one alpha-olefin of formula $CH_2$=CHR, and optionally a diene, where R is H or a linear or branched C2-C8 alkyl and wherein the copolymer comprises 20-35% by weight of alpha-olefin, the amount of alpha-olefin is based on the total weight of (B),

wherein

iii) the polyolefin composition comprises a fraction that is soluble in xylene at 25°C (XS(tot)) in an amount higher than 70% by weight;
iv) the amounts of (A), (B) and of the fraction soluble in xylene at 25°C (XS(tot)) are based on the total weight of the polyolefin composition, the total weight being 100; and
v) the melt flow rate (MFR), measured according to ISO 1133, 230°C, 2.16 kg, of the polyolefin composition ranges from 0.2 to 2.0 g/10 min.

The polyolefin composition of the present disclosure shows a good balance of mechanical properties, in particular of flexibility and softness, at the same time retaining good elastic properties and toughness at low temperature.
The polyolefin composition is also endowed with high puncture and tear resistance.
The polyolefin composition has reduced stickiness and it is therefore easily processable into sheets or membranes, particularly into sheets or membranes suited for roofing applications.
The sheets or membranes comprising the polyolefin composition of the present disclosure are soft and flexible, easy to install, and have remarkable puncture and tear resistance.
While multiple embodiments are disclosed, still other embodiments will become apparent to those skilled in the art from the following detailed description.
As will be apparent, certain embodiments, as disclosed herein, are capable of modifications in various obvious aspects, all without departing from the spirit and scope of the claims as presented herein. Accordingly, the following detailed description is to be regarded as illustrative in nature and not restrictive.

DETAILED DESCRIPTION OF THE INVENTION

In a preferred embodiment, the component (A) is a copolymer of propylene with ethylene.
In one embodiment, the component (A) is a propylene copolymer comprising 3.0-3.9% by weight of the at least one alpha-olefin, preferably the propylene copolymer comprises 3.0-3.9% by weight of ethylene.
In some embodiments, the propylene copolymer (A) has melt flow rate ($MFR_A$), measured according to ISO 1133, 230°C, 2.16 kg, ranging from 35 to 50 g/10 min., preferably from 40 to 50 g/10 min., more preferably from 42 to 48 g/10 min.
In some embodiments, the propylene copolymer (A) comprises an amount of fraction soluble in xylene at 25°C (XSa) lower than 9.0% by weight, preferably the xylene soluble fraction $XS_A$ is comprised in the range 4.0-9.0% by weight, more preferably 6.0-8.0% by weight, the amount of $XS_A$ is based on the weight of copolymer (A).
In some embodiments, the propylene copolymer (B) comprises an amount of fraction soluble in xylene at 25°C ($XS_B$) higher than 80% by weight, preferably higher than 85% by weight, more preferably higher than 90% by weight, the amount of $XS_B$ is based on the weight of copolymer (B).
In one embodiment, the upper limit of the amount of the fraction of component (B) soluble in xylene at 25°C

($XS_B$) is 97% by weight for each lower limit, the amount of $XS_B$ is based on the weight of copolymer (B).

In some embodiments, the component (B) comprises a first copolymer (B1) and a second copolymer (B2) of propylene with at least one alpha-olefin of formula $CH_2$=CHR, and optionally a diene, where R is H or a linear or branched C2-C8 alkyl, provided that the total amount of alpha-olefin comprised in the propylene copolymer (B) is 20-35% by weight, the total amount of alpha-olefin is based on the weight of component (B).

In one embodiment, the component (B) comprises:

(B1) 30-60% by weight, preferably 40-55% by weight of a first copolymer of propylene with at least one alpha-olefin of formula $CH_2$=CHR, and optionally a diene, where R is H or a linear or branched C2-C8 alkyl, and wherein the first propylene copolymer comprises 20-40% by weight, preferably 25-35% by weight of alpha-olefin and a fraction soluble in xylene at 25°C ($XS_{B1}$) higher than 80% by weight, preferably higher than 85% by weight, more preferably higher than 90% by weigh, the amount of alpha-olefin and of $XS_{B1}$ are based on the weight of component (B1); and
(B2) 40-70% by weight, preferably 45-60% by weight of a second copolymer of propylene with at least one alpha-olefin of formula $CH_2$=CHR, and optionally a diene, where R is H or a linear or branched C2-C8 alkyl, and wherein the second propylene copolymer comprises 25-45% by weight, preferably 30-43% by weight of alpha-olefin and a fraction soluble in xylene at 25°C ($XS_{B2}$) higher than 80% by weight, preferably higher than 85% by weight, more preferably higher than 90% by weigh, the amount of alpha-olefin and of $XS_{B2}$ are based on the weight of component (B2),

wherein the amounts of (B1) and (B2) are based on the total weight of the component (B), the weight being 100.

In one embodiment, the upper limit of the amount of the fraction of the component (B1) and/or of the component (B2) soluble in xylene at 25°C ($XS_{B1}$ and/or $XS_{B2}$) is 97% by weight for each lower limit, the amounts of $XS_{B1}$ and $XS_{B2}$ are based on the weight of component (B1) and (B2) respectively.

In one embodiment, the upper limit of $XS_{B1}$ and of $XS_{B2}$ is 97% by weight for each lower limit, the amounts of $XS_{B1}$ and $XS_{B2}$ are based on the weight of component (B1) and (B2) respectively.

In some embodiments, the at least one alpha-olefin comprised in components (B), (B1) and (B2) is independently selected from the group consisting of ethylene, butene-1, hexene-1, 4-methy-pentene-1, octene-1 and combinations thereof. In a preferred embodiment, the alpha-olefin is ethylene.

Optionally, the propylene copolymers (B) and/or (B1) and/or (B2) comprise recurring units derived from a diene, the diene being preferably independently selected from the group consisting of butadiene, 1,4-hexadiene, 1,5-hexadiene, ethylidene-1-norbonene and combinations thereof.

In some embodiments, the total amount of recurring units deriving from a diene comprised in the propylene copolymer (B), (B1) and/or (B2) ranges from 1 to 10% by weight, with respect to the relevant component, the amount of recurring units deriving from a diene being based on the weight of the component (B).

In some embodiments of the present disclosure, the polyolefin composition comprises a total amount of fraction soluble in xylene (XS(tot)) at 25°C ranging from 70 to 90% by weight, preferably from 70 to 80% by weight, the amount of XS(tot) is based on the total weight of the polyolefin composition.

In some embodiments of the present disclosure, the polyolefin composition has melt flow rate (MFR) measured according to ISO 1133, 230°C, 2.16kg ranging from 0.3 to 1.5 g/10 min.,g/10 min., preferably from 0.4 to 1.0 g/10min.

In some embodiments of the present disclosure, the melt flow rate (MFR) of the polyolefin composition measured according to ISO 1133, 230°C, 2.16kg of from 0.2 to 2.0 g/10 min., preferably from 0.3 to 1.5 g/10 min., more preferably from 0.4 to 1.0 g/10 min., is obtained directly from polymerization.

In some embodiments of the present disclosure, the melt flow rate (MFR) of the polyolefin composition measured according to ISO 1133, 230°C, 2.16 kg of from 0.2 to 2.0 g/10 min., preferably from 0.3 to 1.5 g/10 min., more preferably from 0.4 to 1.0 g/10 min is not obtained by degrading (visbreaking) the polyolefin composition obtained from the polymerization reaction.

In some embodiments of the present disclosure, the fraction soluble in xylene at 25°C of the polyolefin composition XS(tot) has intrinsic viscosity (XS(IV)) ranging from 2.5 to 4.5 dl/g, preferably from 3.0 to 3.9 dl/g.

In some embodiments of the present disclosure, the polyolefin composition comprises 20-30% by weight of component (A) and 70-80% by weight of component (B), the amounts of (A) and (B) being based on the total weight of the polyolefin composition, the total weight being 100.

In a preferred embodiment of the present disclosure, the polyolefin composition comprises:

(A) 18-35% by weight, preferably 20-30% by weight, of a copolymer of propylene with ethylene

i) comprising 2.0-4.0% by weight of ethylene, preferably 3.0-3.9% by weight, the amount of ethylene being based on the weight of (A); and
ii) having melt flow rate ($MFR_A$) measured according to ISO 1133, 230°C, 2.16kg ranging from 30 to 60 g/10

min., preferably from 35 to 50 g/10 min., more preferably from 40 to 50 g/10 min., still more preferably from 42 to 48 g/10min; and

(B) 65-82% by weight, preferably 70-80% by weight, of a copolymer of propylene with ethylene comprising 20-35% by weight of ethylene, the amount of ethylene being based on the weight of (B),

wherein

iii) the polyolefin composition comprises an amount of fraction soluble in xylene at 25°C (XS(tot)) higher than 70% by weight, preferably from 70 to 90% by weight, preferably from 70 to 80% by weight; and
iv) the amounts of (A), (B) and of the fraction soluble in xylene at 25°C (XS(tot)) are based on the total weight of the polyolefin composition, the total weight being 100; and
v) the melt flow rate (MFR) measured according to ISO 1133, 230°C, 2.16kg of the polyolefin composition ranges from 0.2 to 2.0 g/10min., preferably from 0.3 to 1.5 g/10min., more preferably from 0.4 to 1.0 g/10min., the melt flow rate being preferably obtained directly from polymerization; and
vi) the fraction soluble in xylene at 25°C of the polyolefin composition (XS(tot)) has intrinsic viscosity (XS(IV)) ranging from 2.5 to 4.5 dl/g, preferably from 3.0 to 3.9 dl/g.

In some embodiments of the present disclosure, the polyolefin composition has at least one of the following properties:

- Flexural Modulus ranging from 40 to 90 MPa, preferably from 50 to 80 MPa, more preferably from 50 to 70 MPa, wherein the Flexural Modulus is measured according to ISO 178:2019 on injection molded specimens; and/or
- Strength at break greater than or equal to 10.0 MPa, preferably greater than or equal to 11.0 MPa, measured according to the method ISO 527 on injection molded specimens. In one embodiment, the strength at break is comprised in the range 10-15 MPa, preferably 11-15 MPa; and/or
- Charpy resistance at -40°C equal to or higher than 6.0 $KJ/m^2$, measured according to ISO 179/1eA 2010 on injection molded specimens. In one embodiment, the Charpy resistance at - 40°C is comprised in the range 6.0 - 10.0 $KJ/m^2$; and/or
- puncture resistance greater than or equal to 170 N, preferably greater than or equal to 200 N, measured on a 1mm-thick extruded sheet according to method ASTM D 4833 (punch diameter: 8 mm, crosshead speed: 300 mm/min). In one embodiment, the puncture resistance is comprised in the range170-250 N, preferably 200-250 N; and/or
- puncture deformation greater than or equal to 40 mm, preferably greater than or equal to 45 mm, measured on a 1mm-thick extruded sheet according to method ASTM D 4833 (punch diameter: 8 mm, crosshead speed: 300 mm/min). In one embodiment, the puncture deformation is comprised in the range 40-60 mm, preferably 45-60 mm; and/or
- Shore D value equal to or lower than 30, measured on 1mm-thick extruded sheets according to method ISO 868 (15 sec). In one embodiment, the Shore D value is comprised in the range 23-30.

In a preferred embodiment of the present disclosure, the polyolefin composition has Flexural Modulus, Strength at break, Charpy resistance at -40°C, puncture resistance, puncture deformation and Shore D values comprised in the ranges indicated above.
In some embodiments, the polyolefin composition is also endowed with at least one of the following properties measured on injection molded specimens:

- Elongation at break, determined according to the method ISO 527, comprised in the range 400-600%; and/or
- Vicat softening temperature, determined according to the method ISO 306 (A50), comprised in the range 40°-60°C; and/or
- Shore A value, determined according to the method ISO 868 (15 sec), comprised in the range 70-90.

In some embodiments, the polyolefin composition is also endowed with at least one of the following properties, measured on 1mm-thick extruded sheets:

- Tensile modulus in MD and/or TD, preferably in MD and TD, determined according to the method ISO 527-3 (specimens type 2, Crosshead speed: 1 mm/min), comprised in the range 30-70 MPa; and/or
- Strength at break in MD and/or TD, preferably in MD and TD, determined according to the method ISO 527-3 (Specimens type: 5, Crosshead speed: 500 mm/min), comprised in the range 10.0-20.0 MPa, preferably 13.0-18.0 MPa;

- Elongation at break in MD and/or TD, preferably in MD and TD, determined according to the method ISO 527-3 (Specimens type: 5, Crosshead speed: 500 mm/min), comprised in the range 600-800%; and/or
- Tear resistance in MD and/or TD, preferably in MD and TD, determined according to the method ASTM D 1004 (Crosshead speed: 51 mm/min; V-shaped die cut specimen), comprised in the range 40-70 g, preferably 40-60 g; and/or
- Shore A value, determined according to the method ISO 868 (15 sec), comprised in the range 70-90.

In one embodiment, the polyolefin composition is endowed with all the properties described above.

The properties disclosed above are measured on injection molded and extruded specimens obtained as described in the experimental part of the disclosure.

In some embodiments, the polyolefin composition is prepared by mixing in the molten state the previously prepared components (A) and (B), eg. in an extruder.

In some preferred embodiments, the polyolefin composition is prepared by sequential polymerization in at least two stages, wherein the second and each subsequent polymerization stage is carried out in the presence of the polymer produced and the catalyst used in the immediately preceding polymerization stage, the monomers and the catalyst being fed in the first polymerization stage.

In some embodiments, the polymerization processes to prepare the single components (A) and (B) or the sequential polymerization process to prepare the polyolefin composition are carried out in the presence of a catalyst selected from metallocene compounds, highly stereospecific Ziegler-Natta catalyst systems and combinations thereof.

In some preferred embodiments, the polymerization processes to prepare the single components (A) and (B) or the sequential polymerization process to prepare the polyolefin composition are carried out in the presence of a highly stereospecific Ziegler-Natta catalyst system comprising:

(1) a solid catalyst component comprising a magnesium halide support on which a Ti compound having at least a Ti-halogen bond is present, and a stereoregulating internal donor;
(2) optionally, but preferably, an Al-containing cocatalyst; and
(3) optionally, but preferably, a further electron-donor compound (external donor).

In some preferred embodiments, the solid catalyst component (1) comprises a titanium compound of formula $Ti(OR)_nX_{y_n}$, wherein n is comprised between 0 and y; y is the valence of titanium; X is halogen and R is a hydrocarbon group having 1-10 carbon atoms or a -COR group. Among them, particularly preferred are titanium compounds having at least one Ti-halogen bond such as titanium tetrahalides or titanium halogenalcoholates. Preferred specific titanium compounds are $TiCl_3$, $TiCl_4$, $Ti(OBu)_4$, $Ti(OBu)Cl_3$, $Ti(OBu)_2Cl_2$, $Ti(OBu)_3Cl$. $TiCl_4$ is particularly preferred.

In one embodiment, the solid catalyst component (1) comprises a titanium compound in an amount securing the presence of from 0.5 to 10% by weight of Ti with respect to the total weight of the solid catalyst component (1).

The solid catalyst component (1) comprises at least one stereoregulating internal electron donor compound selected from mono or bidentate organic Lewis bases, preferably selected from esters, ketones, amines, amides, carbamates, carbonates, ethers, nitriles, alkoxysilanes and combinations thereof.

Particularly preferred are the electron donors belonging to aliphatic or aromatic mono- or dicarboxylic acid esters and diethers.

Among alkyl and aryl esters of optionally substituted aromatic polycarboxylic acids, preferred donors are the esters of phthalic acids such as those described in EP 45977A2 and EP395083A2.

In some embodiments, the internal electron donor is selected from the group consisting of mono- or di-substituted phthalates, wherein the substituents are independently selected among linear or branched $C_{1-10}$ alkyl, $C_{3-8}$ cycloalkyl and aryl radical.

In some preferred embodiments, the internal electron donor is selected among di-isobutyl phthalate, di-n-butyl phthalate, di-n-octyl phthalate, diphenyl phthalate, benzylbutyl phthalate and combinations thereof.

In one embodiment, the internal electron donor is di-isobutyl phthalate.

Esters of aliphatic acids can be selected from malonic acids such as those described in WO98/056830, WO98/056833, WO98/056834, glutaric acids such as those disclosed in WO00/55215, and succinic acids such as those disclosed WO00/63261.

Particular type of diesters are those deriving from esterification of aliphatic or aromatic diols such as those described in WO2010/078494 and USP 7,388,061.

In some embodiments, the internal electron donor is selected from 1,3-diethers of formula

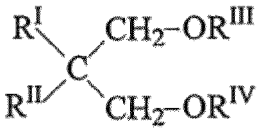

(I)

wherein $R^I$ and $R^{II}$ are independently selected from $C_{1-18}$ alkyl, $C_{3-18}$ ccycloalkyl and $C^{7-18}$ aryl radicals, $R^{III}$ and $R^{IV}$ are independently selected from $C_{1-4}$ alkyl radicals; or the carbon atom in position 2 of the 1,3-diether belongs to a cyclic or polycyclic structure made up of from 5 to 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structures), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures, wherein one or more of the above mentioned alkyl, cycloalkyl, aryl, aralkyl, or alkaryl radicals and the condensed cyclic structures optionally contain one or more heteroatom(s) as substitutes for carbon and/or hydrogen atoms. Ethers of this type are described in EP361493, EP728769 and WO02/100904.

When 1,3-diethers described above are used, the external electron donor (3) can be absent.

In some cases, specific mixtures of internal donors, in particular between aliphatic or aromatic mono or dicarboxylic acid esters and 1,3-diethers as disclosed in WO07/57160 and WO2011/061134 can be used as internal donor.

Preferred magnesium halide support is magnesium dihalide.

In one embodiment, the amount of internal electron donor which remains fixed on the solid catalyst component (1) is 5 to 20% by moles, with respect to the magnesium dihalide.

Preferred methods for the preparation of the solid catalyst components start from Mg dihalide precursors that upon reaction with titanium chlorides converts the precursor into the Mg dihalide support. The reaction is preferably carried out in the presence of the steroregulating internal donor.

In a preferred embodiment the magnesium dihalide precursor is a Lewis adduct of formula $MgCl_2$•nR1OH, where n is a number between 0.1 and 6, and R1 is a hydrocarbon radical having 1-18 carbon atoms. Preferably, n ranges from 1 to 5 and more preferably from 1.5 to 4.5.

The adduct can be suitably prepared by mixing alcohol and magnesium chloride, operating under stirring conditions at the melting temperature of the adduct (100-130°C).

Then, the adduct is mixed with an inert hydrocarbon immiscible with the adduct thereby creating an emulsion which is quickly quenched causing the solidification of the adduct in the form of spherical particles.

The so obtained adduct can be directly reacted with the Ti compound or it can be previously subjected to thermal controlled dealcoholation (80-130°C) so as to obtain an adduct in which the number of moles of alcohol is generally lower than 3 preferably between 0.1 and 2.5. This controlled dealcoholation step may carried out in order to increase the morphological stability of the catalyst during polymerization and/or to increase the catalyst porosity as described in EP395083A2.

The reaction with the Ti compound can be carried out by suspending the optionally dealcoholated adduct in cold $TiCl_4$ (generally at 0°C). The mixture is heated up to 80-130°C and kept at this temperature for 0,5-2 hours. The treatment with $TiCl_4$ can be carried out one or more times. The stereoregulating internal donor can be added during the treatment with $TiCl_4$. The treatment with the internal donor can be repeated one or more times.

The preparation of catalyst components according to this general method is described for example in European Patent Applications US4,399,054, US4,469,648, WO98/44009A1 and as already mentioned, in EP395083A2.

In one embodiment, the catalyst component (1) is in the form of spherical particles having an average diameter ranging from 10 to 350 μm, a surface area ranging from 20 to 250 $m^2/g$, preferably from 80 to 200 $m^2/g$ and porosity greater that 0.2 ml/g, preferably of from 0.25 to 0.5 ml/g, wherein the surface area and the porosity are measured by BET.

In some preferred embodiments, the catalyst system comprises an Al-containing cocatalyst (2) selected from Al-trialkyls, preferably selected from the group consisting of Al-tryethyl, Al-triisobutyl and Al-tri-n-butyl.

In one embodiment, the Al/Ti weight ratio in the catalyst system is from 1 to 1000, preferably from 20 to 800.

In a preferred embodiment, the catalyst system comprises a further electron donor compound (3) (external electron donor) selected among silicon compounds, ethers, esters, amines, heterocyclic compounds, particularly 2,2,6,6-tetramethylpiperidine, and ketones.

Preferably, the external donor is selected among silicon compounds of formula (R2)a(R3)bSi(OR4)c, where a and b are integers from 0 to 2, c is an integer from 1 to 4 and the sum (a+b+c) is 4; R2, R3, and R4, are alkyl, cycloalkyl or aryl radicals with 1-18 carbon atoms, optionally containing heteroatoms. Particularly preferred are the silicon compounds in which a is 1, b is 1, c is 2, at least one of R2 and R3 is selected from branched alkyl, cycloalkyl or aryl groups with 3-10 carbon atoms, optionally containing heteroatoms, and R4 is a C1-C10 alkyl group, in particular methyl.

Examples of such preferred silicon compounds are selected among methylcyclohexyldimethoxysilane (C-donor), diphenyldimethoxysilane, methyl-t-butyldimethoxysilane, dicyclopentyldimethoxysilane (D-donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane and combinations thereof.

The silicon compounds in which a is 0, c is 3, R3 is a branched alkyl or cycloalkyl group, optionally containing heteroatoms, and R4 is methyl are also preferred. Examples of such silicon compounds are cyclohexyltrimethoxysilane, t-butyltrimethoxysilane and hexyltrimethoxysilane.

Even if several combinations of the components of the catalyst system allow to obtain the polyolefin compositions of the present disclosure, a particularly suitable catalyst system comprises di-isobutyl phthalate as internal electron donor and dicyclopentyl dimethoxy silane (D-donor) as external electron donor (3).

In one embodiment, the catalyst system is pre-contacted with small quantities of olefin (prepolymerization), maintaining the catalyst in suspension in a hydrocarbon solvent, and polymerizing at temperatures from 25° to 60°C producing a quantity of polymer from about 0.5 to about 3 times the weight of the catalyst system.

In an alternative embodiment, the prepolymerization is carried out in liquid monomer, producing a quantity of polymer 1000 times the weight of the catalyst system.

Sequential polymerization processes for preparing the polyolefin compositions of the present disclosure are described in EP472946 and WO03/011962, whose content is incorporated in this patent application for reference purposes.

The components (A) and (B) can be produced in any one of the polymerization stages.

In one embodiment, the polymerization process comprises polymerizations stages carried out in the presence of a highly stereospecific Ziegler-Natta catalyst system, wherein:

(a) in the first copolymerization stage monomers are polymerized to form the propylene copolymer (A); and
(b) in the second copolymerization stage the relevant monomers are polymerized to form the propylene copolymer (B).

In one embodiment, the second copolymerization stage (b) comprises a copolymerization stage (b1) and a copolymerization stage (b2), wherein the comonomers are polymerized to form the propylene copolymer (B1) in the stage (b1) and copolymer (B2) in the stage (b2).

In one embodiment, the second copolymerization stage (b) comprises a copolymerization stage (b1) and a copolymerization stage (b2), wherein the propylene copolymer (B2) is formed in the copolymerization stage (b1) and the propylene copolymer (B1) is formed in the polymerization stage (b2).

The polymerization, which can be continuous or batch, can be carried out according to known cascade techniques operating either in mixed liquid phase/gas phase or totally in gas phase.

The liquid-phase polymerization can be either in slurry, solution or bulk (liquid monomer). This latter technology is the most preferred and can be carried out in various types of reactors such as continuous stirred tank reactors, loop reactors or plug-flow reactors.

The gas-phase polymerization stages can be carried out in gas-phase reactors, such as fluidized or stirred, fixed bed reactors.

In one embodiment, the copolymerization stage (a) is carried out in liquid phase using liquid propylene as diluent and the copolymerization stage (b), or the copolymerization stages (b1) and (b2), are carried out in the gas phase.

In a preferred embodiment, also the copolymerization stage (a) is carried out in the gas phase.

In one embodiment, the reaction temperatures of the polymerization stages (a), (b), (b1) and (b2) are independently selected from values comprised in the range from 40° to 90°C.

In one embodiment, the polymerization pressure of the copolymerization stage (a) carried out in liquid phase is from 3.3 to 4.3 MPa.

In one embodiment, the polymerization pressure of the copolymerization stages (a), (b), (b1) and (b2) carried out in gas-phase is independently selected from values comprised in the range from 0.5 to 3.0 MPa.

The residence time of each polymerization stage depends upon the desired ratio of component (A) and (B), or of component (A), (B1) and (B2), of the polyolefin composition. In one embodiment, the residence time in each polymerization stage ranges from 15 minutes to 8 hours.

When the polyolefin composition of the present disclosure is prepared by a sequential polymerization process, the amounts of components (A) and (B), or of components (A), (B1) and (B2), correspond to the split between the polymerization reactors.

The molecular weight of the propylene copolymers obtained in the polymerization stages is regulated using chain transfer agents, such as hydrogen or $ZnEt_2$.

In some preferred embodiments of the present disclosure, the polyolefin composition is blended with additives at the end of the polymerization reaction.

In one embodiment, the polyolefin composition is an additivated polyolefin composition (AD1) comprising a

total amount up to and including 0.3 % by weight, preferably 0.01-0.3% by weight, with respect to the total amount of the additivated polyolefin composition (AD1), of at least one first additive (C) selected from the group consisting of antistatic agents, antioxidants, anti-acids, melt stabilizers and combinations thereof, of the type used in the polyolefin field.

In one embodiment, the polyolefin composition is an additivated polyolefin composition (AD1) consisting of component (A), component (B) and the at least one first additive (C), preferably in a total amount up to and including 0.3 % by weight, more preferably from 0.01 to 0.3% by weight, with respect to the total amount of the additivated polyolefin composition (AD1), the total weight of the additivated polyolefin composition AD1 being 100.

In some embodiments, the polyolefin composition further comprises at least one second additive (D) selected from the group consisting of fillers, pigments, nucleating agents, extension oils, flame retardants (e. g. aluminum trihydrate), UV resistants (e. g. titanium dioxide), UV stabilizers, lubricants (e. g., oleamide), antiblocking agents, waxes, coupling agents for fillers, and combinations thereof, the second additives (D) being of the type used in the polymer compounding art.

In one embodiment, the additivated polyolefin composition comprises up to and including 50% by weight, preferably from 0.01 to 50% by weight, more preferably from 0.5 to 30% by weight, of the at least one second additive (D), the amount of the at least one second additive (D) being based on the total weight of the polyolefin composition comprising the additive (D), the total weight being 100.

In some embodiments, the polyolefin composition is an additivated polyolefin composition (AD2) comprising component (A) and component (B) as described above, and

(C) up to and including 0.3 % by weight, preferably 0.01-0.3% by weight, of at least one first additive; and
(D) up to and including 50% by weight, preferably from 0.01 to 50% by weight, more preferably from 0.5 to 30% by weight, of the at least one second additive,

wherein the amounts are (A) and (B) are based on the total weight of (A)+(B) and the amount of the first additive (C) and the second additive (D) are based on the total weight of the additivated polyolefin composition (AD2), the total weight being 100.

In one embodiment, the first additive (C) and the second additive (D) are selected from the groups described above.

In one embodiment, the additivated polyolefin composition (AD2) consists of the components (A), (B), (C) and (D).

A further object of the present disclosure is a sheet or membrane comprising the polyolefin composition of the present disclosure.

In one embodiment, the sheet or membrane comprises the additivated polyolefin (AD1) or the additivated polyolefin composition (AD2).

In some embodiments, the sheet or membrane has total thickness in the range from 1000 to 2000 $\mu$m, preferably from 1200 to 1800 $\mu$m.

The sheet or membrane is a monolayer or a multilayer sheet or membrane.

In one embodiment, the sheet or membrane is a monolayer sheet or membrane comprising the polyolefin composition or the additivated polyolefin composition (AD1) or the additivated polyolefin composition (AD2).

In one embodiment, the monolayer sheet or membrane consists of the polyolefin composition or of the additivated polyolefin composition (AD1) or of the additivated polyolefin composition (AD2).

In some embodiments, the sheet or membrane is a multilayer sheet or membrane comprising at least one layer X, wherein the layer X comprises the polyolefin composition or the additivated polyolefin composition (AD1) or the additivated polyolefin composition (AD2).

In one embodiment, the layer X comprised in the multilayer sheet or membrane consists of the polyolefin composition or of the additivated polyolefin composition (AD1) or of the additivated polyolefin composition (AD2).

In one embodiment, the multilayer sheet or membrane comprises a layer X and a layer Y, wherein the layer X and the layer Y comprise a polyolefin independently selected from the group consisting of the polyolefin composition, the additivated polyolefin composition (AD 1) and the additivated polyolefin composition (AD2).

In one embodiment, the multilayer sheet or membrane comprises a layer X and a layer Y, wherein the layer X and the layer Y consist of a polyolefin independently selected from the group consisting of the polyolefin composition, the additivated polyolefin composition (AD1), and the additivated polyolefin composition (AD2).

In one embodiment, the multilayer sheet or membrane consists of a layer X and of a layer Y, wherein the layer X and the layer Y comprise a polyolefin independently selected from the group consisting of the polyolefin composition, the additivated polyolefin composition (AD1), and the additivated polyolefin composition (AD2).

In one embodiment, the multilayer sheet or membrane consists of a layer X and of a layer Y, wherein the layer X and the layer Y consist of a polyolefin independently selected from the group consisting of the polyolefin composition, the additivated polyolefin composition (AD1), and the additivated polyolefin composition (AD2).

In one embodiment, the multilayer sheet or membrane has layers structure X/Z/Y, wherein the layer X and the layer Y are as described above, and the layer Z is a reinforcing layer comprising a plastic material selected from the group consisting of propylene homopolymers, propylene copolymers, polyethylene, polyethylene terephthalate and combinations thereof.

In one embodiment, the layer Z is a woven fabric or a non-woven fabric.

Monolayer sheets or membranes are obtainable by calendaring, extrusion or spread coating. In one preferred embodiment, the sheet or membrane is obtained by extrusion.

Multilayers sheets or membranes are obtainable by co-extrusion of the polyolefin comprised in the layers or by lamination of the layers.

In one embodiment, the sheet or membrane is a single-ply roofing sheet or membrane.

In one embodiment, the sheet or membrane is a geomembrane.

The features describing the subject matter of the present disclosure are not inextricably linked to each other. As a consequence, a certain level of preference of one feature does not necessarily involve the same level of preference of the remaining features. Furthermore, it forms part of the present disclosure any combination of parametric ranges and/or features, even though not explicitly described.

## EXAMPLES

The following examples are illustrative only, and are not intended to limit the scope of the disclosure in any manner whatsoever.

### CHARACTERIZATION METHODS

The following methods are used to determine the properties indicated in the description, claims and examples.

**Melt Flow Rate:** Determined according to the method ISO 1133 (230°C, 2.16kg).

**Solubility in xylene at 25°C:** 2.5 g of polymer sample and 250 ml of xylene are introduced in a glass flask equipped with a refrigerator and a magnetic stirrer. The temperature is raised in 30 minutes up to 135°C. The obtained clear solution is kept under reflux and stirring for further 30 minutes. The solution is cooled in two stages. In the first stage, the temperature is lowered to 100°C in air for 10 to 15 minute under stirring. In the second stage, the flask is transferred to a thermostatically controlled water bath at 25°C for 30 minutes. The temperature is lowered to 25°C without stirring during the first 20 minutes and maintained at 25°C with stirring for the last 10 minutes. The formed solid is filtered on quick filtering paper (eg. Whatman filtering paper grade 4 or 541). 100 ml of the filtered solution (S1) is poured in a previously weighed aluminum container, which is heated to 140°C on a heating plate under nitrogen flow, to remove the solvent by evaporation. The container is then kept on an oven at 80°C under vacuum until constant weight is reached. The amount of polymer soluble in xylene at 25°C is then calculated. XS(tot) and $XS_A$ values are experimentally determined. The fraction of component (B) soluble in xylene at 25°C ($XS_B$) can be calculated from the formula:

$$XS = W(A)\times(XS_A) + W(B)\times(XS_B)$$

wherein W(A) and W(B) are the relative amounts of components (A) and (B), respectively, and W(A)+ W(B)=1.

**Intrinsic viscosity of the xylene soluble fraction:** to calculate the value of the intrinsic viscosity IV, the flow time of a polymer solution is compared with the flow time of the solvent (THN). A glass capillary viscometer of Ubbelohde type is used. The oven temperature is adjusted to 135°C. Before starting the measurement of the solvent flow time *t0* the temperature must be stable (135° ± 0.2°C). Sample meniscus detection for the viscometer is performed by a photoelectric device.

Sample preparation: 100 ml of the filtered solution (S1) is poured in a beaker and 200 ml of acetone are added under vigorous stirring. Precipitation of insoluble fraction must be complete as evidenced by a clear solid-solution separation. The suspension is filtered on a weighed metallic screen (200 mesh), the beaker is rinsed and the precipitate is washed with acetone so that the o-xylene is completely removed. The precipitate is dried in a vacuum oven at 70°C until a constant weight is reached. 0.05g of precipitate are weighted and dissolved in 50ml of tetrahydronaphthalene (THN) at a temperature of 135°C. The efflux time t of the sample solution is measured and converted into a value of intrinsic viscosity [η] using Huggins' equation (Huggins, M.L., J. Am. Chem. Soc. 1942, 64, 11, 2716-2718) and the following data:

- concentration (g/dl) of the sample;
- the density of the solvent at a temperature of 135°C;
- the flow time t0 of the solvent at a temperature of 135°C on the same viscometer.

One single polymer solution is used to determine [η].

**Comonomer content:** $^{13}C$ NMR spectra are acquired on a Bruker AV-600 spectrometer equipped with cryoprobe, operating at 160.91 MHz in the Fourier transform mode at 120 °C. The peak of the $S_{\delta\delta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) is used as an internal reference at 29.9 ppm.

The samples are dissolved in 1,1,2,2-tetrachloroethane-*d2* at 120 °C with a 8 % wt/v concentration. Each spectrum is acquired with a 90° pulse, and 15 seconds of delay between pulses and CPD to remove $^{1}H$-$^{13}C$ coupling. 512 transients are stored in 32K data points using a spectral window of 9000 Hz. The assignments of the spectra, the evaluation of triad distribution and the composition are made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar content of ethylene and propylene is calculated from triads using the following equations:

$$[E]mol\ = EEE + PEE + PEP$$

$$[P]mol\ = PPP + PPE + EPE$$

The weight percentage of ethylene content (E% wt) is calculated using the following equation:

$$E\%\,wt = \frac{[E]\,mol\ \times MWE}{([E]\,mol\ \times MWE) + ([P]\,mol\ \times MWP)} \times 100$$

wherein

[P] mol = the molar percentage of propylene content;
MWE = molecular weights of ethylene
MWP = molecular weight of propylene.

The product of reactivity ratio $r_1r_2$ is calculated according to Carman (C.J. Carman, R.A. Harrington and C.E. Wilkes, Macromolecules, 1977; 10, 536) as:

$$r_1r_2 = 1 + \left(\frac{EEE + PEE}{PEP} + 1\right) - \left(\frac{P}{E} + 1\right)\left(\frac{EEE + PEE}{PEP} + 1\right)^{0.5}$$

The tacticity of propylene sequences is calculated as mm content from the ratio of the PPP mm$T_{\beta\beta}$ (28.90-29.65 ppm) and the whole $T_{\beta\beta}$ (29.80-28.37 ppm).

The amount of ethylene of component B) is calculated from the total ethylene content of the polymer (C2(tot)) using the formula:

$$C2(tot) = W(A)\times C2(A) + W(B)\times C2(B)$$

wherein W(A) and W(B) are the relative amounts of components (A) and (B) (W(A)+W(B)=1), and C2(A) and C2(B) are

the weight percentages of ethylene in component (A) and (B).

**Injection molded specimens:** test specimens 80 × 10 × 4 mm were obtained according to the method ISO 1873-2:2007.

**Flexural modulus:** Determined according to the method ISO 178:2019 on injection molded test specimens.

**Strength and Elongation at break:** Determined according to the method ISO 527 on injection molded test specimens.

**Shore A and D on injection molded specimens:** Determined according to the method ISO 868 (15 sec).

**Vicat softening temperature:** Determined according to the method ISO 306 (A50) on injection molded specimens.

**Charpy Impact test at -40°C:** measured according to ISO 179/1eA 2010 on injection molded specimens.

**Tensile Modulus (MD and TD):** Determined according to the method ISO 527-3 on 1mm-thick extruded sheets. Specimens type 2, Crosshead speed: 1 mm/min.

**Tensile strength and elongation at break (MD and TD):** Determined according to the method ISO527-3 on 1mm-thick extruded sheets. Specimens type: 5, Crosshead speed: 500 mm/min.

**Tear resistance:** Determined according to the method ASTM D 1004 on 1mm-thick extruded sheets. Crosshead speed: 51 mm/min; V-shaped die cut specimen.

**Puncture resistance and deformation:** Determined according to the method ASTM D 4833 on 1mm-thick extruded sheets. Punch diameter 8 mm, crosshead speed: 300 mm/min.

**Shore A and D on extruded sheets:** Determined according to the method ISO 868 (15 sec) on 1mm-thick extruded sheets.

**Preparation of extruded specimens:** the polymer in form of granules are fed via feed hoppers into a Leonard extruder (mono-screw extruder, 40 mm in diameter and 27 LID in length) where the polymer was first melted (melt temperature 230°C), compressed, mixed and finally metered out at a throughput rate of 10 Kg/h with a metering pump (15 cc/rpm). The molten polymer leaves the flat die (width 200 mm, die lip at 0.8-0.9 mm) and is instantly cooled through a vertical three-rolls calendrer having roll-temperature of 60°C. 1mm-thick extruded sheets are obtained.

**Examples 1 and comparative example 2**

The polymerization was carried out in two gas phase reactors connected in series and equipped with devices to transfer the product from the first to the second reactor.

For the polymerization a Ziegler-Natta catalyst system was used comprising:

- a titanium-containing solid catalyst component prepared with the procedure described in EP395083, Example 3, according to which di-isobutyl phthalate was used as internal electron donor compound;
- triethylaluminium (TEAL) as co-catalyst;
- Dicyclopentyl dimethoxy silane (DCPMS) as external electron donor.

The solid catalyst component was contacted with TEAL and DCPMS in a precontacting vessel, with a weight ratio of TEAL to the solid catalyst component of 4-5 and a weight ratio TEAL/DCPMS of 5.

The catalyst system was then subjected to pre-polymerization by maintaining it in suspension in liquid propylene at 20°C for about 30-32 minutes before introducing it into the first polymerization reactor.

Propylene copolymer (A) was produced into the first gas-phase reactor by feeding in a continuous and constant flow the pre-polymerized catalyst system, hydrogen (used as molecular weight regulator), propylene and ethylene all in gaseous phase.

The propylene copolymer (A) coming from the first reactor was discharged in a continuous flow and, after having been purged of unreacted monomers, was introduced, in a continuous flow, into the second gas-phase reactor, together with quantitatively constant flows of hydrogen and ethylene, all in the gas state.

In the second reactor the propylene copolymer (B) was produced.

Polymerization conditions, molar ratio of the reactants and composition of the copolymers obtained are shown in Table 1.

Table 1 - polymerization conditions

| | | **A Ex. 1** | **Comp. Ex. 2** |
|---|---|---|---|
| **GPR 1 - component** | | | |
| Temperature | °C | 60 | 70 |
| Pressure | barg | 18 | 18 |

(continued)

| | | A Ex. 1 | Comp. Ex. 2 |
|---|---|---|---|
| **GPR 1 - component** | | | |
| $H_2/C_3$- | mol. | 0.14 | 0.10 |
| $C_2$-/($C_2$- + $C_3$-) | mol | 0.020 | 0.01 |
| **Split** | **wt%** | **24** | **31** |
| Xylene solubles of A (XSa) | wt% | 7.6 | 5.5 |
| MFR of A ($MFR_A$) | g/10 min. | 44 | 25 |
| $C_2$- content of A | wt% | 3.3 | 3.2 |
| **GPR 2 - Component B** | | | |
| Temperature | °C | 60 | 60 |
| Pressure | barg | 18 | 18 |
| $H_2/C_2$- | mol. | 0.108 | 0.09 |
| $C_2$-/($C_2$- + $C_3$-) | mol. | 0.16 | 0.16 |
| **Split** | **wt%** | **76** | **69** |
| $C_2$- content of B(*) | wt% | 27 | 27 |
| $C_2$- content of (A+ B) | wt% | 21.4 | 19.4 |
| Xylene solubles of (A + B) (XS) | wt% | 74.0 | 63.3 |
| Intrinsic viscosity of (A+B) (XSIV) | dl/g | 3.02 | 3.18 |
| MFR of (A+ B) | g/10 min. | 0.51 | 0.61 |

Notes: C2- = ethylene in gas phase (IR); C3- = propylene in gas phase (IR); split = amount of polymer produced in the concerned reactor. (*) Calculated values.

The polymer particles exiting the second reactor were subjected to a steam treatment to remove the unreacted monomers and volatile compounds, and then dried.

The thus obtained polyolefin composition was mixed with the additives in a twin screw extruder Berstorff ZE 25 (length/diameter ratio of screws: 34) and extruded under nitrogen atmosphere in the following conditions:

| | |
|---|---|
| Rotation speed: | 250 rpm; |
| Extruder output: | 15 kg/hour; |
| Melt temperature: | 245 °C. |

The additives added to the polyolefin composition were:

- 0.1% by weight of Irganox® 1010;
- 0.1% by weight of Irgafos® 168;
- 0.05% by weight of DHT-4A®.

wherein the amounts of additives are based on the total weight of the polyolefin composition containing the additives.

Irganox® 1010 is 2,2-bis[3-[,5-bis(1,1-dimethylethyl)-4-hydroxyphenyl]-1-oxopropoxy]methyl]-1,3-propanediyl-3,5-bis(1,1-dimethylethyl)-4-hydroxybenzene-propanoate; Irgafos® 168 is tris(2,4-di-tert.-butylphenyl) phosphite; DHT-4A® is Magnesium Aluminum Carbonate Hydroxide (hydrate).

Properties of the materials tested on injection molded specimens are reported in Table 3. Properties of the material tested on extruded sheets are reported in table 4.

**Example 3 and comparative example 4**

Using the same catalyst system of example 1, polyolefin compositions were prepared in three gas phase reactors connected in series and equipped with devices to transfer the product from one reactor to the subsequent reactor.

Propylene copolymer (A) was produced into the first gas-phase reactor by feeding in a continuous and constant flow the pre-polymerized catalyst system, hydrogen (used as molecular weight regulator), propylene and ethylene all in gaseous phase.

The propylene copolymer (A) coming from the first reactor was discharged in a continuous flow and, after having been purged of unreacted monomers, was introduced, in a continuous flow, into the second gas-phase reactor, together with quantitatively constant flows of hydrogen and ethylene, all in the gas state.

In the second reactor the propylene copolymer (B1) was produced. The product coming from the second reactor was discharged in a continuous flow and, after having been purged of unreacted monomers, was introduced, in a continuous flow, into the third gas-phase reactor, together with quantitatively constant flows of hydrogen, ethylene and propylene, all in the gas state. In the third reactor an ethylene-propylene polymer (B2) was produced.

Polymerization conditions, molar ratios of the reactants and composition of the copolymers obtained are shown in Table 2.

Table 2 - polymerization conditions

| | | Ex. 3 | Comp. Ex. 4 |
|---|---|---|---|
| **GPR 1 - component A** | | | |
| Temperature | °C | 55 | 60 |
| Pressure | barg | 16 | 18 |
| H2/C3- | mol. | 0.14 | 0.04 |
| $C_2$-/($C_2$- + $C_3$-) | mol | 0.024 | 0.030 |
| **Split** | **wt%** | **21** | **21** |
| Xylene solubles of A ($XS_A$) | wt% | 8.1 | < 8.0 |
| MFR of A ($MFR_A$) | g/10 min. | 33 | 5.5 |
| $C_2$- content of A | wt% | 3.2 | 3.2 |
| **GPR 2 - Component B1** | | | |
| Temperature | °C | 55 | 64 |
| Pressure | barg | 16 | 18 |
| H2/C2- | mol. | 0.089 | 0.015 |
| $C_2$-/($C_2$- + $C_3$-) | mol. | 0.16 | 0.16 |
| **Split** | **wt%** | **39** | **49** |
| $C_2$- content of B 1(*) | wt% | 30 | 26 |
| $C_2$- content of (A+ B 1) | wt% | 20.4 | 19.4 |
| Xylene solubles of (A + B1) | wt% | 61.0 | 63.3 |
| Intrinsic viscosity (A+B1) (XSIV) | dl/g | 3.10 | 4.80 |
| MFR of (A + B1) | g/10 min. | 1.00 | 0.61 |
| **GPR 3 - Component B2** | | | |
| Temperature | °C | 55 | 60 |
| Pressure | barg | 16 | 18 |
| H2/C2- | mol. | 0.075 | 0.009 |
| C2-/(C2- + C3-) | mol. | 0.17 | 0.21 |

(continued)

| GPR 3 - Component B2 | | | |
|---|---|---|---|
| **Split** | **wt%** | **40** | **30** |
| C2- content of B2(*) | wt% | 27 | 40 |
| C2- content of (A+ B1+B2) | wt% | 23.2 | 25.5 |
| Xylene solubles of (A+B 1+B2) (XS) | wt% | 74.4 | 73.0 |
| Intrinsic viscosity (A+B 1+B2) (XSIV) | dl/g | 3.39 | 5.50 |
| MFR of (A+B 1+B2) | g/10 min. | 0.4 | <0.1 |
| Notes: C2- = ethylene in gas phase (IR); C3- = propylene in gas phase (IR); split = amount of polymer produced in the concerned reactor. (*) Calculated values. | | | |

The polymer particles exiting the third reactor were subjected to a steam treatment to remove the unreacted monomers and volatile compounds, dried and melt-mixed with additives as described in example 1.

Properties of the materials tested on injection molded specimens are reported in Table 3. Properties of the material tested on extruded sheets are reported in Table 4.

Table 3 - characterization on injection molded specimens

| | | **Ex. 1** | **Comp. Ex. 2** | **Ex. 3** | **Comp. Ex.4** |
|---|---|---|---|---|---|
| MFR | g/10min | 0.51 | 0.61 | 0.40 | 0.65(**) |
| Flexural Modulus | MPa | 56 | 99 | 50 | 46 |
| Strength at break | MPa | 11.5 | 10.5 | 12.4 | 9.9 |
| Elongation at break | % | 440 | 400 | 510 | 505 |
| Vicat temperature (9.81 N) | °C | 51 | 62 | 48 | 46 |
| Charpy Resistance -40°C | $KJ/m^2$ | 6.1 | 5.2 | 6.5 | 5.2 |
| Shore A | | 86 | > 90 | 84 | 79 |
| Shore D | | 25 | 31 | 25 | < 20 |
| (**) the polyolefin was cracked with 170 ppm of peroxide to increase the MFR and make it processable with state-of-the-art extruders used in producing sheets or membranes. | | | | | |

Table 4 - characterization on extruded sheets

| | | **Ex. 1** | **Comp. Ex. 2** | **Ex. 3** | **Comp. Ex.4** |
|---|---|---|---|---|---|
| MFR | g/10min | 0.51 | 0.61 | 0.40 | 0.65(**) |
| Tensile Modulus MD | MPa | 44 | 74 | 66 | 46 |
| Strength at break MD | MPa | 16.0 | 20.0 | 14.9 | 12.2 |
| Elongation at break MD | % | 730 | 760 | 660 | 690 |
| | | | | | |
| Tensile modulus TD | MPa | 41 | 71 | 40 | 32 |
| Strength at break TD | MPa | 14.5 | 20.2 | 14.0 | 12.1 |
| Elongation at break TD | % | 730 | 820 | 680 | 711 |
| | | | | | |
| Tear Resistance MD | g | 49 | 70 | 58 | 50 |
| Tear resistance TD | g | 54 | 70 | 58 | 46 |

(continued)

| | | Ex. 1 | Comp. Ex. 2 | Ex. 3 | Comp. Ex.4 |
|---|---|---|---|---|---|
| | | | | | |
| Puncture resistance | N | 186 | 241 | 210 | 165 |
| Puncture deformation | mm | 51 | 48 | 51 | 48 |
| | | | | | |
| Shore A | | 83 | > 90 | 84 | 80 |
| Shore D | | 25 | 34 | 23 | 24 |
| (**) the polyolefin was cracked with 170 ppm of peroxide to increase the MFR and make it processable with state-of-the-art extruders used in producing sheets or membranes. | | | | | |

## Claims

**1.** A polyolefin composition comprising:

(A) 18-35% by weight of a copolymer of propylene with at least one alpha-olefin of formula $CH_2$=CHR, where R is H or a linear or branched C2-C3 alkyl, wherein

i) the copolymer contains 2.0-4.0% by weight of at least one alpha-olefin, the amount of the alpha-olefin is based on the total weight of (A); and
ii) the propylene copolymer has melt flow rate ($MFR_A$), measured according to ISO 1133, 230°C, 2.16 kg, ranging from 30 to 60 g/10min; and

(B) 65-82% by weight of a copolymer of propylene with at least one alpha-olefin of formula $CH_2$=CHR, and optionally a diene, where R is H or a linear or branched C2-C8 alkyl and wherein the copolymer comprises 20-35% by weight of alpha-olefin, the amount of alpha olefin is based on the total weight of (B),

wherein

iii) the polyolefin composition comprises a fraction that is soluble in xylene at 25°C (XS(tot)) in an amount higher than 70% by weight;
iv) the amounts of (A), (B) and of the fraction soluble in xylene at 25°C (XS(tot)) are based on the total weight of the polyolefin composition; and
v) the melt flow rate (MFR), measured according to ISO 1133, 230°C, 2.16 kg, of the polyolefin composition ranges from 0.2 to 2.0 g/10 min.

**2.** The polyolefin composition of claim 1, wherein the component (A) is a copolymer of propylene with ethylene.

**3.** The polyolefin composition of claim 1 or 2, wherein the propylene copolymer (A) has melt flow rate ($MFR_A$) measured according to ISO 1133, 230°C, 2.16kg ranging from 35 to 50 g/10 min., preferably from 40 to 50 g/10 min., more preferably from 42 to 48 g/10min.

**4.** The polyolefin composition according to any one of claims 1-3, wherein the propylene copolymer (A) comprises an amount of fraction soluble in xylene at 25°C (XSa) lower than 9.0% by weight, preferably comprised in the range 4.0-9.0% by weight, more preferably 6.0-8.0% by weight, the amount of $XS_A$ being based on the weight of copolymer (A).

**5.** The polyolefin composition according to any one of claims 1-4, wherein the component (B) comprises:

(B1) 30-60% by weight, preferably 40-55% by weight of a first copolymer of propylene with at least one alpha-olefin of formula $CH_2$=CHR, and optionally a diene, where R is H or a linear or branched C2-C8 alkyl, and wherein the first propylene copolymer comprises 20-40% by weight, preferably 25-35% by weight of alpha-olefin and a fraction soluble in xylene at 25°C ($XS_{B1}$) higher than 80% by weight, preferably higher than 85%

by weight, more preferably higher than 90% by weigh, the amount of alpha-olefin and of XSsi are based on the weight of component (B1); and

(B2) 40-70% by weight, preferably 45-60% by weight of a second copolymer of propylene with at least one alpha-olefin of formula $CH_2$=CHR, and optionally a diene, where R is H or a linear or branched C2-C8 alkyl, and wherein the second propylene copolymer comprises 25-45% by weight, preferably 30-43% by weight of alpha-olefin and a fraction soluble in xylene at 25°C ($XS_{B2}$) higher than 80% by weight, preferably higher than 85% by weight, more preferably higher than 90% by weigh, the amount of alpha-olefin and of $XS_{B2}$ are based on the weight of component (B2),

wherein the amounts of (B1) and (B2) are based on the total weight of the component (B).

**6.** The polyolefin composition according to any one of claims 1-5, wherein the at least one alpha-olefin comprised in components (B), (B1) and (B2) is independently selected from the group consisting of ethylene, butene-1, hexene-1, 4-methy-pentene-1, octene-1 and combinations thereof, the alpha-olefin being preferably ethylene.

**7.** The polyolefin composition according to any one of claims 1-6, comprising an amount of fraction soluble in xylene (XS(tot)) at 25°C ranging from 70 to 90% by weight, preferably from 70 to 80% by weight, the amount of XS(tot) is based on the total weight of the polyolefin composition.

**8.** The polyolefin composition according to any one of claims 1-7, having the melt flow rate measured according to ISO 1133, 230°C, 2.16 kg ranges from 0.3 to 1.5 g/10 min., preferably from 0.4 to 1.0 g/10 min.

**9.** The polyolefin composition according to any one of claims 1-8, wherein the fraction soluble in xylene at 25°C of the polyolefin composition has intrinsic viscosity (XS(IV)) ranging from 2.5 to 4.5 dl/g, preferably from 3.0 to 3.9 dl/g.

**10.** The polyolefin composition according to claim 1, comprising:

(A) 18-35% by weight, preferably 20-30% by weight, of a copolymer of propylene with ethylene comprising 2.0-4.0% by weight of ethylene, preferably 3.0-3.9% by weight, the amount of ethylene being based on the weight of (A) and having melt flow rate ($MFR_A$) measured according to ISO 1133, 230°C, 2.16 kg ranging from 30 to 60 g/10 min., preferably from 35 to 50 g/10 min., more preferably from 40 to 50 g/10 min., still more preferably from 42 to 48 g/10min; and

(B) 65-82% by weight, preferably 70-80% by weight, of a copolymer of propylene with ethylene comprising 20-35% by weight of ethylene, the amount of ethylene being based on the weight of (B),

wherein

iii) the polyolefin composition comprises an amount of fraction soluble in xylene at 25°C (XS(tot)) higher than 70% by weight, preferably from 70 to 90% by weight, preferably from 70 to 80% by weight; and

iv) the amounts of (A), (B) and of the fraction soluble in xylene at 25°C (XS(tot)) are based on the total weight of the polyolefin composition; and

v) the melt flow rate (MFR) measured according to ISO 1133, 230°C, 2.16kg of the polyolefin composition ranges from 0.2 to 2.0 g/10min., preferably from 0.3 to 1.5 g/10min., more preferably from 0.4 to 1.0 g/10min., the melt flow rate being preferably obtained directly from polymerization; and

vi) the fraction soluble in xylene at 25°C of the polyolefin composition (XS(tot)) has intrinsic viscosity (XS(IV)) ranging from 2.5 to 4.5 dl/g, preferably from 3.0 to 3.9 dl/g.

**11.** The polyolefin composition according to any one of claims 1-10, having at least one of the following properties:

- Flexural Modulus ranging from 40 to 90 MPa, preferably from 50 to 80 MPa, more preferably from 50 to 70 MPa, wherein the Flexural Modulus is measured according to ISO 178:2019 on injection molded specimens; and/or
- Strength at break greater than or equal to 10.0 MPa, preferably greater than or equal to 11.0 MPa, measured according to the method ISO 527 on injection molded specimens; and/or
- Charpy resistance at -40°C, measured according to ISO 1 7911 eA 2010 on injection molded specimens equal to or higher than 6.0 KJ/$m^2$; and/or
- puncture resistance greater than or equal to 170 N, preferably greater than or equal to 200 N, measured on a 1mm-thick extruded sheet according to method ASTM D 4833 (punch diameter: 8 mm, crosshead speed: 300 mm/min); and/or

- puncture deformation greater than or equal to 40 mm, preferably greater than or equal to 45 mm, measured on a 1mm-thick extruded sheet according to method ASTM D 4833 (punch diameter: 8 mm, crosshead speed: 300 mm/min); and/or
- Shore D value equal to or lower than 30, measured on 1mm-thick extruded sheets according to method ISO 868 (15 sec).

**12.** A sheet or membrane comprising the polyolefin composition according to any one of claims 1-11.

**13.** The sheet or membrane according to claim 12, wherein the sheet or membrane is a multilayer sheet or membrane having layers' structure X/Z/Y, wherein the layer X and the layer Y comprise a polyolefin composition according to any one of claims 1-11, and the layer Z is a reinforcing layer comprising a plastic material selected from the group consisting of propylene homopolymers, propylene copolymers, polyethylene, polyethylene terephthalate and combinations thereof.

**14.** The sheet or membrane according to claim 12 or 13 in the form of a single-ply roofing sheet or membrane.

**15.** The sheet or membrane according to claim 12 or 13 in the form of a geomembrane.

## Patentansprüche

**1.** Polyolefinzusammensetzung, umfassend:

(A) 18 bis 35 Gew.% eines Copolymers von Propylen mit mindestens einem alpha-Olefin mit der Formel $CH_2$=CHR, wobei R H oder ein lineares oder verzweigtes $C_2$- bis $C_3$-Alkyl ist, wobei

i) das Copolymer 2,0 bis 4,0 Gew.% von mindestens einem alpha-Olefin enthält, wobei die Menge des alpha-Olefins sich auf das Gesamtgewicht von (A) bezieht; und
ii) das Propylencopolymer eine Schmelzflussrate, ($MFR_A$), gemessen gemäß ISO 1133, 230 °C, 2,16 kg, im Bereich von 30 bis 60 g/10 min. hat; und

(B) 65 bis 82 Gew.% eines Copolymers von Propylen mit mindestens einem alpha-Olefin der Formel $CH_2$=CHR, und gegebenenfalls einem Dien, wobei R H oder ein lineares oder verzweigtes $C_2$- bis Cs-Alkyl ist, und wobei das Copolymer 20 bis 35 Gew.% alpha-Olefin umfasst, wobei die Menge an alpha-Olefin sich auf das Gesamtgewicht von (B) bezieht,

wobei

iii) die Polyolefinzusammensetzung eine in Xylol bei 25 °C lösliche Fraktion, (XS(tot)), in einer Menge von mehr als 70 Gew.% umfasst;
iv) die Mengen von (A), (B) und der in Xylol bei 25 °C löslichen Fraktion, (XS(tot)), sich auf das Gesamtgewicht der Polyolefinzusammensetzung beziehen; und
v) die Schmelzflussrate, (MFR), gemessen gemäß ISO 1133, 230 °C, 2,16 kg, der Polyolefinzusammensetzung im Bereich von 0,2 bis 2,0 g/10 min liegt.

**2.** Polyolefinzusammensetzung nach Anspruch 1, wobei die Komponente (A) ein Copolymer von Propylen mit Ethylen ist.

**3.** Polyolefinzusammensetzung nach Anspruch 1 oder 2, wobei das Propylencopolymer (A) eine Schmelzflussrate, ($MFR_A$), gemessen gemäß ISO 1133, 230 °C, 2,16 kg, im Bereich von 35 bis 50 g/10 min., vorzugsweise 40 bis 50 g/10 min., bevorzugter 42 bis 48 g/10 min. hat.

**4.** Polyolefinzusammensetzung nach einem der Ansprüche 1 bis 3, wobei das Propylencopolymer (A) eine Menge der in Xylol bei 25 °C löslichen Fraktion, ($XS_A$), kleiner als 9,0 Gew.%, vorzugsweise im Bereich von 4,0 bis 9,0 Gew.%, bevorzugter 6,0 bis 8,0 Gew.% umfasst, wobei die Menge von $XS_A$ sich auf das Gewicht von Copolymer (A) bezieht.

**5.** Polyolefinzusammensetzung nach einem der Ansprüche 1 bis 4, wobei die Komponente (B) umfasst:

(B1) 30 bis 60 Gew.%, vorzugsweise 40 bis 55 Gew.% eines ersten Copolymers von Propylen mit mindestens einem alpha-Olefin mit der Formel $CH_2$=CHR, und gegebenenfalls einem Dien, wobei R H oder ein lineares oder verzweigtes $C_2$- bis Cs-Alkyl ist, und wobei das erste Propylencopolymer 20 bis 40 Gew.%, vorzugsweise 25 bis 35 Gew.% alpha-Olefin und eine bei 25 °C in Xylol lösliche Fraktion, ($XS_{B1}$), von mehr als 80 Gew.%, vorzugsweise mehr als 85 Gew.%, bevorzugter mehr als 90 Gew.% umfasst, wobei die Menge von alpha-Olefin und $XS_{B1}$ sich auf das Gewicht der Komponente (B1) bezieht; und
(B2) 40 bis 70 Gew.%, vorzugsweise 45 bis 60 Gew.% eines zweiten Copolymers von Propylen mit mindestens einem alpha-Olefin mit der Formel $CH_2$=CHR, und gegebenenfalls einem Dien, wobei R H oder ein lineares oder verzweigtes $C_2$- bis Cs-Alkyl ist, und wobei das zweite Propylencopolymer 25 bis 45 Gew.%, vorzugsweise 30 bis 43 Gew.% alpha-Olefin und eine bei 25 °C in Xylol lösliche Fraktion, ($XS_{B2}$), von mehr als 80 Gew.%, vorzugsweise mehr als 85 Gew.%, bevorzugter mehr als 90 Gew.% umfasst, wobei die Menge von alpha-Olefin und $XS_{B2}$ sich auf das Gewicht der Komponente (B2) bezieht,
wobei die Mengen von (B1) und (B2) sich auf das Gesamtgewicht der Komponente (B) beziehen.

**6.** Polyolefinzusammensetzung nach einem der Ansprüche 1 bis 5, wobei das mindestens eine alpha-Olefin, das in Komponenten (B), (B1) und (B2) enthalten ist, unabhängig ausgewählt ist aus der Gruppe bestehend aus Ethylen, Buten-1, Hexen-1, 4-Methylpenten-1, Octen-1 und Kombinationen davon, wobei das alpha-Olefin vorzugsweise Ethylen ist.

**7.** Polyolefinzusammensetzung nach einem der Ansprüche 1 bis 6, umfassend eine Menge der in Xylol bei 25 °C löslichen Fraktion, (XS(tot)), im Bereich von 70 bis 90 Gew.%, vorzugsweise 70 bis 80 Gew.%, wobei die Menge von XS(tot) sich auf das Gesamtgewicht der Polyolefinzusammensetzung bezieht.

**8.** Polyolefinzusammensetzung nach einem der Ansprüche 1 bis 7 mit einer Schmelzflussrate, gemessen gemäß ISO 1133, 230 °C, 2,16 kg, im Bereich von 0,3 bis 1,5 g/10 min., vorzugsweise 0,4 bis 1,0 g/10 min.

**9.** Polyolefinzusammensetzung nach einem der Ansprüche 1 bis 8, wobei die in Xylol bei 25 °C lösliche Fraktion der Polyolefinzusammensetzung eine Grenzviskosität, (XS(IV)), im Bereich von 2,5 bis 4,5 dl/g, vorzugsweise 3,0 bis 3,9 dl/g hat.

**10.** Polyolefinzusammensetzung nach Anspruch 1, umfassend:

(A) 18 bis 35 Gew.%, vorzugsweise 20 bis 30 Gew.% eines Copolymers von Propylen mit Ethylen, umfassend 2,0 bis 4,0 Gew.% Ethylen, vorzugsweise 3,0 bis 3,9 Gew.%, wobei die Menge an Ethylen sich auf das Gewicht von (A) bezieht, und mit einer Schmelzflussrate, ($MFR_A$), gemessen gemäß ISO 1133, 230 °C, 2,16 kg, im Bereich von 30 bis 60 g/10 min., vorzugsweise 35 bis 50 g/10 min., bevorzugter 40 bis 50 g/10 min., noch bevorzugter 42 bis 48 g/10 min.; und
(B) 65 bis 82 Gew.%, vorzugsweise 70 bis 80 Gew.% eines Copolymers von Propylen mit Ethylen, umfassend 20 bis 35 Gew.% Ethylen, wobei die Menge an Ethylen sich auf das Gewicht von (B) bezieht,

wobei

iii) die Polyolefinzusammensetzung eine Menge einer in Xylol bei 25 °C löslichen Fraktion, (XS(tot)), größer als 70 Gew.%, vorzugsweise im Bereich von 70 bis 90 Gew.%, vorzugsweise 70 bis 80 Gew.% umfasst; und
iv) die Mengen von (A), (B) und der in Xylol bei 25 °C löslichen Fraktion, (XS(tot)), sich auf das Gesamtgewicht der Polyolefinzusammensetzung beziehen; und
v) die Schmelzflussrate, (MFR), gemessen gemäß ISO 1133, 230 °C, 2,16 kg, der Polyolefinzusammensetzung im Bereich von 0,2 bis 2,0 g/10 min., vorzugsweise 0,3 bis 1,5 g/10 min., bevorzugter 0,4 bis 1,0 g/10 min. liegt, wobei die Schmelzflussrate vorzugsweise direkt aus der Polymerisation erhalten wird; und
vi) die in Xylol bei 25 °C lösliche Fraktion der Polyolefinzusammensetzung, (XS(tot)), eine Grenzviskosität, (XS(IV)), im Bereich von 2,5 bis 4,5 dl/g, vorzugsweise 3,0 bis 3,9 dl/g hat.

**11.** Polyolefinzusammensetzung nach einem der Ansprüche 1 bis 10 mit mindestens einer der folgenden Eigenschaften:

- Biegemodul im Bereich von 40 bis 90 MPa, vorzugsweise 50 bis 80 MPa, bevorzugter 50 bis 70 MPa, wobei der Biegemodul gemäß ISO 178:2019 an spritzgegossenen Prüfkörpern gemessen wird; und/oder
- Reißfestigkeit größer als oder gleich 10,0 MPa, vorzugsweise größer als oder gleich 11,0 MPa, gemessen gemäß dem Verfahren ISO 527 an spritzgegossenen Prüfkörpern; und/oder

- Charpy-Festigkeit bei -40 °C, gemessen gemäß ISO 179/1eA 2010 an spritzgegossenen Prüfkörpern, gleich oder größer als 6,0 $KJ/m^2$; und/oder
- Durchstechfestigkeit größer als oder gleich 170 N, vorzugsweise größer als oder gleich 200 N, gemessen an einer 1 mm dicken extrudierten Bahn gemäß dem Verfahren ASTM D 4833 (Stanzdurchmesser: 8 mm, Kreuzkopfgeschwindigkeit: 300 mm/min.); und/oder
- Durchstechverformung größer als oder gleich 40 mm, vorzugsweise größer als oder gleich 45 mm, gemessen an einer 1 mm dicken extrudierten Bahn gemäß dem Verfahren ASTM D 4833 (Stanzdurchmesser: 8 mm, Kreuzkopfgeschwindigkeit: 300 mm/min.); und/oder
- Shore D-Wert gleich oder kleiner als 30, gemessen an 1 mm dicken extrudierten Bahnen gemäß dem Verfahren ISO 868 (15 s).

**12.** Bahn oder Membran, welche die Polyolefinzusammensetzung nach einem der Ansprüche 1 bis 11 umfasst.

**13.** Bahn oder Membran nach Anspruch 12, wobei die Bahn oder Membran eine mehrschichtige Bahn oder Membran mit einer Schichtenstruktur X/Z/Y ist, wobei die Schicht X und die Schicht Y eine Polyolefinzusammensetzung gemäß einem der Ansprüche 1 bis 11 umfassen, und die Schicht Z eine Verstärkungsschicht ist, die ein Kunststoffmaterial ausgewählt aus der Gruppe bestehend aus Propylenhomopolymeren, Propylencopolymeren, Polyethylen, Polyethylenterephthalat und Kombinationen davon umfasst.

**14.** Bahn oder Membran nach Anspruch 12 oder 13 in Form einer einlagigen Dachbahn oder -membran.

**15.** Bahn oder Membran nach Anspruch 12 oder 13 in Form einer Geomembran.

## Revendications

**1.** Composition polyoléfinique comprenant :

(A) 18 à 35 % en poids d'un copolymère de propylène avec au moins une alpha-oléfine de formule $CH_2$=CHR, où R représente H ou un alkyle en C2-C3 linéaire ou ramifié, dans laquelle

i) le copolymère contient 2,0 à 4,0 % en poids d'au moins une alpha-oléfine, la quantité de l'alpha-oléfine étant basée sur le poids total de (A) ; et
ii) le copolymère de propylène présente un indice de fluidité à chaud ($MFR_A$), mesuré selon la norme ISO 1133, 230 °C, 2,16 kg, situé dans la plage de 30 à 60 g/10 min ; et

(B) 65 à 82 % en poids d'un copolymère de propylène avec au moins une alpha-oléfine de formule $CH_2$=CHR et éventuellement un diène, où R représente H ou un alkyle en C2-C8 linéaire ou ramifié et le copolymère comprenant 20 à 35 % en poids d'alpha-oléfine, la quantité d'alpha-oléfine étant basée sur le poids total de (B),

dans laquelle

iii) la composition polyoléfinique comprend une fraction soluble dans le xylène à 25 °C (XS(tot)) en une quantité supérieure à 70 % en poids ;
iv) les quantités de (A), (B) et de la fraction soluble dans le xylène à 25 °C (XS(tot)) sont basées sur le poids total de la composition polyoléfinique ; et
v) l'indice de fluidité à chaud (MFR), mesuré selon la norme ISO 1133, 230 °C, 2,16 kg, de la composition polyoléfinique est situé dans la plage de 0,2 à 2,0 g/10 min.

**2.** Composition polyoléfinique selon la revendication 1, le constituant (A) étant un copolymère de propylène avec de l'éthylène.

**3.** Composition polyoléfinique selon la revendication 1 ou 2, le copolymère de propylène (A) présentant un indice de fluidité à chaud ($MFR_A$), mesuré selon la norme ISO 1133, 230 °C, 2,16 kg, situé dans la plage de 35 à 50 g/10 min, de préférence de 40 à 50 g/10 min, plus préférablement de 42 à 48 g/10 min.

**4.** Composition polyoléfinique selon l'une quelconque des revendications 1 à 3, le copolymère de propylène (A) comprenant une quantité de fraction soluble dans le xylène à 25 °C ($XS_A$) inférieure à 9,0 % en poids, de préférence

située dans la plage de 4,0 à 9,0 % en poids, plus préférablement de 6,0 à 8,0 % en poids, la quantité de $XS_A$ étant basée sur le poids du copolymère (A).

**5.** Composition polyoléfinique selon l'une quelconque des revendications 1 à 4, le constituant (B) comprenant :

(B1) 30 à 60 % en poids, de préférence 40 à 55 % en poids d'un premier copolymère de propylène avec au moins une alpha-oléfine de formule $CH_2$=CHR et éventuellement un diène, où R représente H ou un alkyle en C2-C8 linéaire ou ramifié et le premier copolymère de propylène comprenant 20 à 40 % en poids, de préférence 25 à 35 % en poids d'alpha-oléfine et une fraction soluble dans le xylène à 25 °C ($XS_{B1}$) supérieure à 80 % en poids, de préférence supérieure à 85 % en poids, plus préférablement supérieure à 90 % en poids, la quantité d'alpha-oléfine et de $XS_{B1}$ étant basées sur le poids du constituant (B1) ; et
(B2) 40 à 70 % en poids, de préférence 45 à 60 % en poids d'un deuxième copolymère de propylène avec au moins une alpha-oléfine de formule $CH_2$=CHR et éventuellement un diène, où R représente H ou un alkyle en C2-C8 linéaire ou ramifié et le deuxième copolymère de propylène comprenant 25 à 45 % en poids, de préférence 30 à 43 % en poids d'alpha-oléfine et une fraction soluble dans le xylène à 25 °C ($XS_{B2}$) supérieure à 80 % en poids, de préférence supérieure à 85 % en poids, plus préférablement supérieure à 90 % en poids, la quantité d'alpha-oléfine et de $XS_{B2}$ étant basées sur le poids du constituant (B2), les quantités de (B1) et (B2) étant basées sur le poids total du constituant (B).

**6.** Composition polyoléfinique selon l'une quelconque des revendications 1 à 5, ladite au moins une alpha-oléfine comprise dans les constituants (B), (B1) et (B2) étant indépendamment choisie dans le groupe constitué par l'éthylène, le butène-1, l'hexène-1, le 4-méthyl-pentène-1, l'octène-1 et des combinaisons de ceux-ci, l'alpha-oléfine étant de préférence l'éthylène.

**7.** Composition polyoléfinique selon l'une quelconque des revendications 1 à 6, comprenant une quantité de fraction soluble dans le xylène (XS(tot)) à 25 °C située dans la plage de 70 à 90 % en poids, de préférence de 70 à 80 % en poids, la quantité de XS(tot) étant basée sur le poids total de la composition polyoléfinique.

**8.** Composition polyoléfinique selon l'une quelconque des revendications 1 à 7, présentant l'indice de fluidité à chaud, mesuré selon la norme ISO 1133, 230 °C, 2,16 kg, situé dans la plage de 0,3 à 1,5 g/10 min, de préférence de 0,4 à 1,0 g/10 min.

**9.** Composition polyoléfinique selon l'une quelconque des revendications 1 à 8, la fraction soluble dans le xylène à 25 °C de la composition polyoléfinique présentant une viscosité intrinsèque (XS(IV)) située dans la plage de 2,5 à 4,5 dl/g, de préférence de 3,0 à 3,9 dl/g.

**10.** Composition polyoléfinique selon la revendication 1, comprenant :

(A) 18 à 35 % en poids, de préférence 20 à 30 % en poids, d'un copolymère de propylène avec de l'éthylène comprenant 2,0 à 4,0 % en poids d'éthylène, de préférence 3,0 à 3,9 % en poids, la quantité d'éthylène étant basée sur le poids de (A) et présentant un indice de fluidité à chaud ($MFR_A$), mesuré selon la norme ISO 1133, 230 °C, 2,16 kg, situé dans la plage de 30 à 60 g/10 min, de préférence de 35 à 50 g/10 min, plus préférablement de 40 à 50 g/10 min, encore plus préférablement de 42 à 48 g/10 min ; et
(B) 65 à 82 % en poids, de préférence 70 à 80 % en poids, d'un copolymère de propylène avec de l'éthylène comprenant 20 à 35 % en poids d'éthylène, la quantité d'éthylène étant basée sur le poids de (B),

dans laquelle

iii) la composition polyoléfinique comprend une quantité de fraction soluble dans le xylène à 25 °C (XS(tot)) supérieure à 70 % en poids, de préférence de 70 à 90 % en poids, de préférence de 70 à 80 % en poids ; et
iv) les quantités de (A), (B) et de la fraction soluble dans le xylène à 25 °C (XS(tot)) sont basées sur le poids total de la composition polyoléfinique ; et
v) l'indice de fluidité à chaud (MFR), mesuré selon la norme ISO 1133, 230 °C, 2,16 kg, de la composition polyoléfinique est situé dans la plage de 0,2 à 2,0 g/10 min, de préférence de 0,3 à 1,5 g/10 min, plus préférablement de 0,4 à 1,0 g/10 min, l'indice de fluidité à chaud étant de préférence obtenu directement à partir de la polymérisation ; et
vi) la fraction soluble dans le xylène à 25 °C de la composition polyoléfinique (XS(tot)) présente une viscosité intrinsèque (XS(IV)) située dans la plage de 2,5 à 4,5 dl/g, de préférence de 3,0 à 3,9 dl/g.

**11.** Composition polyoléfinique selon l'une quelconque des revendications 1 à 10, présentant au moins l'une des propriétés suivantes :

- module de flexion situé dans la plage de 40 à 90 MPa, de préférence de 50 à 80 MPa, plus préférablement de 50 à 70 MPa, le module de flexion étant mesuré selon la norme ISO 178:2019 sur des échantillons moulés par injection ; et/ou
- résistance à la rupture supérieure ou égale à 10,0 MPa, de préférence supérieure ou égale à 11,0 MPa, mesurée selon la méthode ISO 527 sur des échantillons moulés par injection ; et/ou
- résistance au choc Charpy à -40 °C, mesurée selon la norme ISO 179/1eA 2010 sur des échantillons moulés par injection, égale ou supérieure à 6,0 $KJ/m^2$ ; et/ou
- résistance à la perforation supérieure ou égale à 170 N, de préférence supérieure ou égale à 200 N, mesurée sur une feuille extrudée de 1 mm d'épaisseur selon la méthode ASTM D 4833 (diamètre de poinçon : 8 mm, vitesse de la traverse : 300 mm/min.) ; et/ou
- déformation à la perforation supérieure ou égale à 40 mm, de préférence supérieure ou égale à 45 mm, mesurée sur une feuille extrudée de 1 mm d'épaisseur selon la méthode ASTM D 4833 (diamètre de poinçon : 8 mm, vitesse de la traverse : 300 mm/min) ; et/ou
- valeur Shore D égale ou inférieure à 30, mesurée sur des feuilles extrudées de 1 mm d'épaisseur selon la méthode ISO 868 (15 sec).

**12.** Feuille ou membrane comprenant la composition polyoléfinique selon l'une quelconque des revendications 1 à 11.

**13.** Feuille ou membrane selon la revendication 12, la feuille ou la membrane étant une feuille ou une membrane multicouche présentant une structure de couches X/Z/Y, la couche X et la couche Y comprenant une composition polyoléfinique selon l'une quelconque des revendications 1 à 11 et la couche Z étant une couche de renforcement comprenant une matière plastique choisie dans le groupe constitué par les homopolymères de propylène, les copolymères de propylène, le polyéthylène, le poly(téréphtalate d'éthylène) et leurs combinaisons.

**14.** Feuille ou membrane selon la revendication 12 ou 13 se présentant sous la forme d'une feuille ou d'une membrane de toiture monocouche.

**15.** Feuille ou membrane selon la revendication 12 ou 13 se présentant sous la forme d'une géomembrane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011076664 A1
- WO 03076509 A
- WO 2009077481 A
- WO 2012072426 A
- EP 45977 A2
- EP 395083 A2
- WO 98056830 A
- WO 98056833 A
- WO 98056834 A
- WO 0055215 A
- WO 0063261 A
- WO 2010078494 A
- US 7388061 B
- EP 361493 A
- EP 728769 A
- WO 02100904 A
- WO 0757160 A
- WO 2011061134 A
- US 4399054 A
- US 4469648 A
- WO 9844009 A1
- EP 472946 A
- WO 03011962 A
- EP 395083 A


### Non-patent literature cited in the description


- **HUGGINS, M.L.** *J. Am. Chem. Soc.,* 1942, vol. 64 (11), 2716-2718
- **C. J. CARMAN ; R. A. HARRINGTON ; C. E. WILKES.** Monomer Sequence Distribution in Ethylene-Propylene Rubber Measured by C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536